# EUROPEAN PATENT SPECIFICATION

(11) **EP 3 453 837 B1**
(45) Date of publication and mention of the grant of the patent: **28.07.2021**
(21) Application number: 18193865.5
(22) Date of filing: 11.09.2018
(51) Int. Cl.: F01D 9/04, F01D 21/04

(54) **FAN EXIT STATOR ASSEMBLY RETENTION SYSTEM**
RÜCKHALTESYSTEM EINES STATORANORDNUNG EINES GEBLÄSEAUSTRITTS
SYSTÈME DE RÉTENTION D'ENSEMBLE DE STATOR DE SORTIE DE VENTILATEUR

(30) Priority: 11.09.2017 US 201715700608
(43) Date of publication of application: 13.03.2019
(73) Proprietor: Raytheon Technologies Corporation, Farmington, CT 06032 (US)
(72) Inventor: SIMONDS, Mark E., Cape Neddick, ME Maine 03902 (US)
(74) Representative: Dehns

(56) References cited:
- EP-A2- 1 079 075
- EP-A2- 2 479 383
- US-A- 4 710 097

## Description

### BACKGROUND

Exemplary embodiments pertain to the art of gas turbine engines and, more particularly, to a fan exit stator assembly retention system.

In a gas turbine engine used for propulsion, a fan case and a smaller diameter compressor case cooperate to radially bound an annular fan duct. Fan exit guide vanes, or stators, span across the fan duct to de-swirl working medium fluid flowing therethrough. Typically, fan exit stators do not radially retain an outer diameter shroud of the stator, but rigid bolting at the inner diameter shroud may be present. Upon impact with an object during operation, such as a bird or ice, the outer diameter shroud experiences excessive radial deflection, and a radial load passes through the vane and into a joint between the vane and the inner diameter shroud. No mechanical retention is present at the vane to the inner diameter shroud joint, apart from a thin layer of silicone adhesive. A lack of a robust retention system may result in shroud damage and/or vane withdrawal.

EP 1079075 A2 discloses a stator assembly in which an inner shroud has openings to receive vane tips. EP 2479383 A2 and US 4710097 also disclose stator vane assemblies.

### BRIEF DESCRIPTION

Viewed from one aspect the present invention provides a retention system for a fan exit stator vane assembly according to claim 1.

Further embodiments may include a slot defined by the stator vane proximate the radially inner end of the stator vane. Also included is a retainer bar insertable in the slot, the retainer bar located on a radially inner side of the inner diameter shroud to prevent withdrawal of the stator vane from the inner diameter shroud.

Further embodiments may include a slot defined by the base of the stator vane. Also included is a retainer bar insertable in the slot, the retainer bar located on a radially inner side of the inner diameter shroud to prevent withdrawal of the stator vane from the inner diameter shroud.

Further embodiments may include that the retainer bar has a primarily rectangular cross-section.

Further embodiments may include that the stator vane is a fan exit stator located proximate an inlet of a low pressure compressor of a gas turbine engine.

Further embodiments may include that the frame member is a forward center body frame of the gas turbine engine.

Also disclosed is a gas turbine engine according to claim 7.

Further disclosed is a method of retaining a fan exit stator vane of a gas turbine engine according to claim 8.

Further embodiments may include inserting a retainer bar through a slot defined by the fan exit stator vane proximate the radially inner end of the fan exit stator vane subsequent to insertion of the radially inner end of the fan exit stator vane through the opening of the inner diameter shroud to radially retain the fan exit stator vane relative to the inner diameter shroud.

Further embodiments may include that the frame member is the forward center body frame.

### BRIEF DESCRIPTION OF THE DRAWINGS

The following descriptions should not be considered limiting in any way. With reference to the accompanying drawings, like elements are numbered alike:
FIG. 1 is a side, partial cross-sectional view of a gas turbine engine; and
FIG. 2 is a side, partial cross-sectional view of a portion of the gas turbine engine;
FIG. 3 is an elevational view of an outer diameter shroud and frame bolted flange of a stator assembly of the gas turbine engine;
FIG. 4 is a perspective view of a plurality of stator vanes and an inner diameter shroud;
FIG. 5 is a perspective view of an inner diameter portion of the stator vane; and
FIG. 6 is a perspective view of a retention member operatively coupled to the stator vane.

### DETAILED DESCRIPTION

A detailed description of one or more embodiments of the disclosed apparatus and method are presented herein by way of exemplification and not limitation with reference to the Figures.

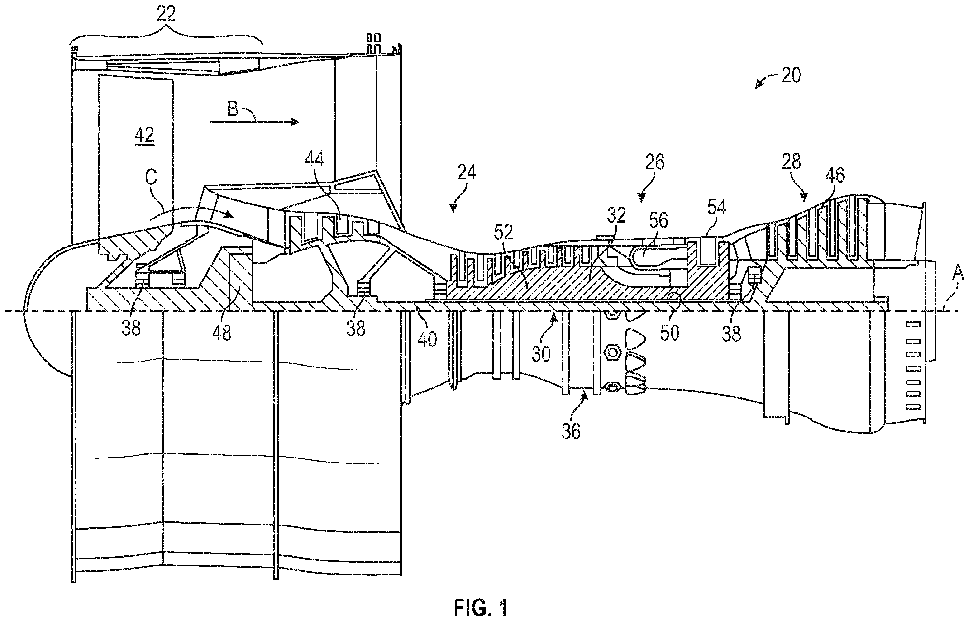

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 10,668 meters (35,000 feet). The flight condition of 0.8 Mach and 10,668 meters (35,000 feet), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}, where one degree R (Rankine) = 0.556 K (Kelvin) The "Low corrected fan tip speed" as disclosed herein according to one non-limiting embodiment is less than about 350.5 m/sec (1150 ft/second).

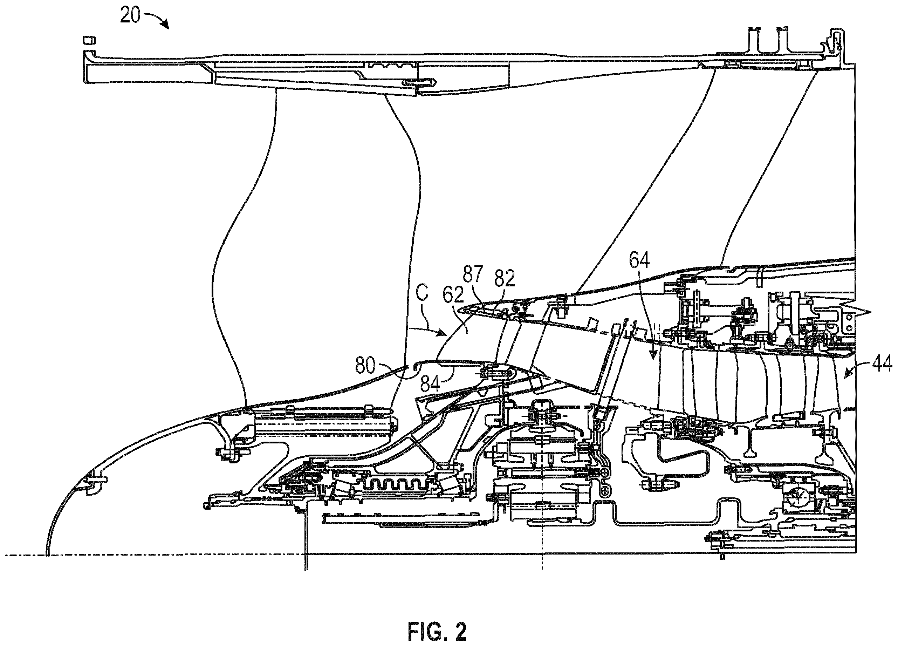

Referring to FIG. 2, with continued reference to FIG. 1, the gas turbine engine 20 includes a plurality of fan exit stator vanes 62 positioned around the longitudinal axis A and circumferentially spaced from each other in a substantially axial plane of the gas turbine engine 20. The fan exit stator vanes 62 are located proximate an inlet to the low pressure compressor section 44 of the gas turbine engine.

For purposes of description and clarity, one of the fan exit stator vanes 62 is shown and described herein. The fan exit stator vane functions as an airfoil to remove a substantial circumferential flow component from air exiting the fan section 22. The core air flow C air passes over the fan exit stator vane 62. A pressure side of an aft section of the fan exit stator vane 62 guides the entering air so that upon complete passage of the fan exit stator vane 62, the air flow is in an axial direction. Air exiting the fan section 22 flows to the low pressure compressor 44. The air entering the low pressure compressor 44 first flows past the fan exit stator vane 62 and then through a front center body duct 64. The air with reduced swirl then flows through inlet guide vanes 66 and first rotors 68 of the low pressure compressor 44.

The fan exit vane 62 is radially bound by an inner diameter shroud 80 proximate a radially inner end 84 of the fan exit stator vane 62 and by an outer diameter shroud 86 proximate a radially outer end 87 of the fan exit stator vane 62. However, prior fan exit stator vanes do not include radial retention of the outer diameter shroud 86. The embodiments described herein, provide such outer diameter retention, as well as a more structurally reliable inner diameter retention assembly.

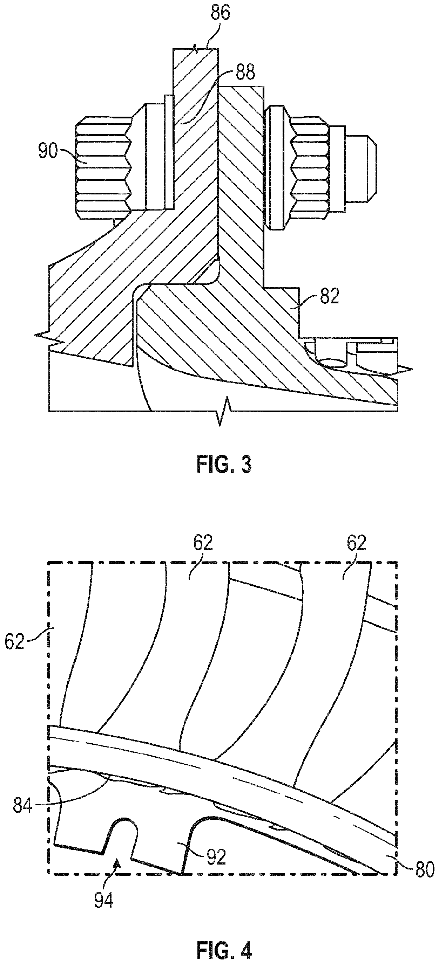

Referring to FIG. 3, the outer diameter shroud 86 is illustrated in a coupled condition with a frame structure 82 of the gas turbine engine 20. In particular, the outer diameter shroud 86 is mechanically fastened to the frame structure 82 with one or more fasteners 90, such as a bolt or the like. In the illustrated embodiment, the outer diameter shroud 86 has a flange 88 adjacent to a flange of the frame 82 that provides a structure for the fastener(s) 90 to pass through. The mechanically fastened assembly of the outer diameter shroud 86 avoids loose retention at the radially outer end 87 of the fan exit stator vane 62, as the outer diameter shroud 86 is rigidly coupled to the frame structure 82 of the gas turbine engine 20. In some embodiments, the frame structure 82 is a forward center body frame of the gas turbine engine.

Referring to FIG. 4, the inner diameter shroud 80, to which the radially inner end 84 of the fan exit stator vane 62 is coupled, is illustrated in more detail. The inner diameter shroud 80 includes an inner shroud flange 92 extending therefrom. The inner shroud flange 92 is coupled to the frame member 82 of the gas turbine engine 20. However, to reduce radial constraint of the fan exit stator vane 62, a recess 94 is defined by the inner shroud flange 92, thereby allowing radial movement between the inner diameter shroud 80 and the frame member to which it is coupled. The above-described structure forms a flange radial spline, connecting the inner diameter shroud 80 to the frame member. A tangential and axial constraining member, such as bushing or the like is disposed within the recess 94 in some embodiments.

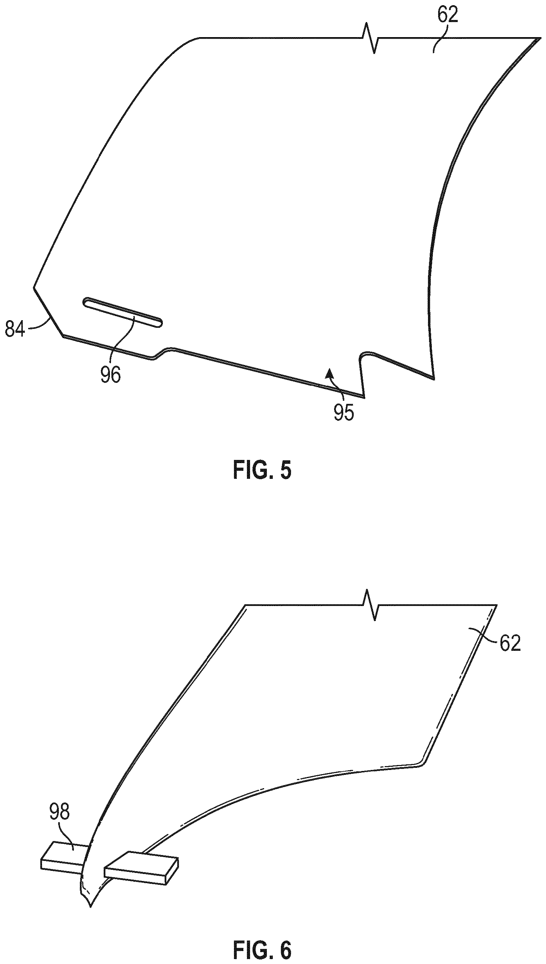

Referring to FIG. 5, the radially inner end 84 of the fan exit stator vane 62 is illustrated. In the embodiment of FIG. 5, the radially inner end 84 is extended to form a base 95 that defines a slot 96. Specifically, the radially inner end 84 is wider in at least one direction than the width of the majority of the fan exit stator vane 62. As shown in FIG. 6, a retainer bar 98 is inserted in the slot 96 in some embodiments, with the retainer bar 98 positioned radially inwardly of the inner diameter shroud 80 to secure the fan exit stator vane 62 to the inner diameter shroud 80 in a mechanically fastened manner, rather than relying on simply adhesive, as done in typical fan exit stator vane assemblies. In some embodiments, the retainer bar 98 has a rectangular cross-section, but it is to be appreciated that other geometries are contemplated.

The features of the retention system described above, provide a rigid outer diameter shroud connection to the supporting frame, a radial spline connecting the inner diameter shroud to the frame, an extended vane inner diameter, and a retainer inserted into the vane extension. The system substantially reduces outer diameter shroud deflection and radial load on the fan exit stator vane 62 while the retainer and vane extension prevent stressing the adhesive joint and vane withdrawal. By rigidly constraining the outer diameter shroud, damage to the shroud due to excessive deflection is avoided. A rigid outer diameter, combined with an inner diameter shroud radial spline reduces radial load on the vane to inner diameter shroud joint, and combined with a retainer protects the adhesive joint and avoids vane pull out from the inner diameter shroud.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present invention. As used herein, the singular forms "a", "an" and "the" arc intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the essential scope thereof. Therefore, it is intended that the present invention not be limited to the particular embodiment disclosed as the best mode contemplated for carrying out this present invention, but that the present invention will include all embodiments falling within the scope of the claims.

## Claims

1. A retention system for a fan exit stator vane assembly comprising:
a stator vane (62) having a radially inner end (84) and a radially outer end (87);
an outer diameter shroud (86) coupled to the radially outer end (87) of the stator vane (62);
an inner diameter shroud (80) defining an opening, the radially inner end (84) of the stator vane (62) extending through the opening such that the inner diameter shroud (80) is coupled to the radially inner end (84) of the stator vane (62);
a flange (88) of the outer diameter shroud (86) coupled to a frame member (82) with a mechanical fastener (90);
**characterized in that** the retention system further comprises:
an inner shroud flange (92) coupled to the frame member (82), the inner shroud flange (92) extending radially inwardly and defining a radial recess (94), the radial recess (94) allowing radial movement of the inner shroud flange (92) relative to the frame member (82).

2. The retention system of claim 1, further comprising:
a slot (96) defined by the stator vane (62) proximate the radially inner end (84) of the stator vane; and
a retainer bar (98) insertable in the slot (96), the retainer bar located on a radially inner side of the inner diameter shroud (80) to prevent withdrawal of the stator vane from the inner diameter shroud.

3. The retention system of claim 1, further comprising:
a slot (96) defined by the base (95) of the stator vane (62); and
a retainer bar (98) insertable in the slot (96), the retainer bar located on a radially inner side of the inner diameter shroud (80) to prevent withdrawal of the stator vane from the inner diameter shroud.

4. The retention system of claim 2 or 3, wherein the retainer bar (98) has a primarily rectangular cross-section.

5. The retention system of any preceding claim, wherein the stator vane (62) is a fan exit stator (62) located proximate an inlet of a low pressure compressor (44) of a gas turbine engine.

6. The retention system of any preceding claim, wherein the frame member (82) is a forward center body frame of the gas turbine engine.

7. A gas turbine engine (20) comprising:
a compressor section (24);
a combustion section (26);
a turbine section (28); and
a retention system as claimed in any preceding claim, wherein the stator vane (62) is a fan exit stator (62) located proximate an inlet of the compressor section (24) and the frame member (82) is a forward center body frame (82).

8. A method of retaining a fan exit stator vane (62) of a gas turbine engine (20) comprising:
coupling an outer diameter shroud (86) to a forward center body frame (82) with a mechanical fastener (90);
inserting a radially inner end (84) of the fan exit stator vane (62) through an opening of an inner diameter shroud (80); and
operatively coupling the inner diameter shroud (80) to a frame member (82) of the gas turbine engine (20) at an inner shroud flange (92), the inner shroud flange (92) defining a radial recess (94) to allow radial movement of the inner diameter shroud (80) relative to the frame member (82).

9. The method of claim 8, further comprising inserting a retainer bar (98) through a slot (96) defined by the fan exit stator vane (62) proximate the radially inner end (84) of the fan exit stator vane (62) subsequent to insertion of the radially inner end (84) of the fan exit stator vane (62) through the opening of the inner diameter shroud (80) to radially retain the fan exit stator vane (62) relative to the inner diameter shroud (80).

10. The method of claim 8 or 9, wherein the frame member (82) is the forward center body frame.

## Patentansprüche

1. Rückhaltesystem für eine Gebläseaustrittsstatorleitschaufelanordnung, umfassend:
eine Statorleitschaufel (62), die ein radial inneres Ende (84) und ein radial äußeres Ende (87) aufweist;
ein Außendurchmesserdeckband (86), das mit dem radial äußeren Ende (87) der Statorleitschaufel (62) gekoppelt ist;
ein Innendurchmesserdeckband (80), das eine Öffnung definiert, wobei sich das radial innere Ende (84) der Statorleitschaufel (62) so durch die Öffnung erstreckt, dass das Innendurchmesserdeckband (80) mit dem radial inneren Ende (84) der Statorleitschaufel (62) gekoppelt ist;
einen Flansch (88) des Außendurchmesserdeckbandes (86), der an ein Rahmenelement (82) mit einem mechanischen Befestigungsmittel (90) gekoppelt ist;
**dadurch gekennzeichnet, dass** das Rückhaltesystem ferner Folgendes umfasst:
einen Innendeckbandflansch (92), der an das Rahmenelement (82) gekoppelt ist, wobei sich der Innendeckbandflansch (92) radial einwärts erstreckt und eine radiale Aussparung (94) definiert, wobei die radiale Aussparung (94) eine radiale Bewegung des Innendeckbandflansches (92) relativ zum Rahmenelement (82) ermöglicht.

2. Rückhaltesystem nach Anspruch 1, ferner Folgendes umfassend:
einen Schlitz (96), der durch die Statorleitschaufel (62) nahe dem radial inneren Ende (84) der Statorleitschaufel definiert ist; und
einen Haltestab (98), der in den Schlitz (96) eingesetzt werden kann, wobei der Haltestab auf einer radial inneren Seite des Innendurchmesserdeckbandes (80) angeordnet ist, um ein Wegziehen der Statorleitschaufel von dem Innendurchmesserdeckband zu verhindern.

3. Rückhaltesystem nach Anspruch 1, ferner Folgendes umfassend:
einen Schlitz (96), der von der Basis (95) der Statorleitschaufel (62) definiert wird; und
einen Haltestab (98), der in den Schlitz (96) eingesetzt werden kann, wobei der Haltestab auf einer radial inneren Seite des Innendurchmesserdeckbandes (80) angeordnet ist, um ein Wegziehen der Statorleitschaufel von dem Innendurchmesserdeckband zu verhindern.

4. Rückhaltesystem nach Anspruch 2 oder 3, wobei der Haltestab (98) einen primär rechtwinkligen Querschnitt aufweist.

5. Rückhaltesystem nach einem der vorstehenden Ansprüche, wobei die Statorleitschaufel (62) ein Gebläseaustrittsstator (62) ist, der nahe einem Einlass eines Niederdruckverdichters (44) eines Gasturbinentriebwerks angeordnet ist.

6. Rückhaltesystem nach einem der vorstehenden Ansprüche, wobei das Rahmenelement (82) ein vorderer Mittelkörperrahmen des Gasturbinentriebwerks ist.

7. Gasturbinentriebwerk (20), umfassend:
einen Verdichterabschnitt (24);
einen Verbrennerabschnitt (26);
einen Turbinenabschnitt (28); und
ein Rückhaltesystem nach einem der vorstehenden Ansprüche, wobei die Statorleitschaufel (62) ein Gebläseaustrittsstator (62) ist, der nahe einem Einlass des Verdichterabschnitts (24) angeordnet ist, und das Rahmenelement (82) ein vorderer Mittelkörperrahmen (82) ist.

8. Verfahren zum Rückhalten einer Gebläseaustrittsstatorleitschaufel (62) eines Gasturbinentriebwerks (20), umfassend:
Koppeln eines Außendurchmesserdeckbandes (86) an einen vorderen Mittelkörperrahmen (82) mit einem mechanischen Befestigungsmittel (90);
Einsetzen eines radial inneren Endes (84) der Gebläseaustrittsstatorleitschaufel (62) durch eine Öffnung eines Innendurchmesserdeckbandes (80); und
wirksames Koppeln des Innendurchmesserdeckbandes (80) an ein Rahmenelement (82) des Gasturbinentriebwerks (20) an einem Innendeckbandflansch (92), wobei der Innendeckbandflansch (92) eine radiale Aussparung (94) definiert, um eine radiale Bewegung des Innendurchmesserdeckbandes (80) relativ zum Rahmenelement (82) zu ermöglichen.

9. Verfahren nach Anspruch 8, ferner das Einsetzen eines Haltestabs (98) durch einen Schlitz (96), der durch die Gebläseaustrittsstatorleitschaufel (62) nahe dem radial inneren Ende (84) der Gebläseaustrittsstatorleitschaufel (62) definiert ist, anschließend an das Einsetzen des radial inneren Endes (84) der Gebläseaustrittsstatorleitschaufel (62) durch die Öffnung des Innendurchmesserdeckbandes (80) umfassend, um die Gebläseaustrittsstatorleitschaufel (62) radial relativ zum Innendurchmesserdeckband (80) zu halten.

10. Verfahren nach Anspruch 8 oder 9, wobei das Rahmenelement (82) der vordere Mittelkörperrahmen ist.

## Revendications

1. Système de rétention pour un ensemble d'aube de stator de sortie de ventilateur comprenant :
une aube de stator (62) ayant une extrémité radialement interne (84) et une extrémité radialement externe (87) ;
un carénage de diamètre externe (86) couplé à l'extrémité radialement externe (87) de l'aube de stator (62) ;
un carénage de diamètre interne (80) définissant une ouverture, l'extrémité radialement interne (84) de l'aube de stator (62) s'étendant à travers l'ouverture de sorte que le carénage de diamètre interne (80) est couplé à l'extrémité radialement interne (84) de l'aube de stator (62) ;
une bride (88) du carénage de diamètre externe (86) couplée à un élément de châssis (82) avec une fixation mécanique (90) ;
**caractérisé en ce que** le système de rétention comprend en outre :
une bride de carénage interne (92) couplée à l'élément de châssis (82), la bride de carénage interne (92) s'étendant radialement vers l'intérieur et définissant un évidement radial (94), l'évidement radial (94) permettant un mouvement radial de la bride de carénage interne (92) par rapport à l'élément de châssis (82).

2. Système de rétention selon la revendication 1, comprenant en outre :
une fente (96) définie par l'aube de stator (62) à proximité de l'extrémité radialement interne (84) de l'aube de stator ; et
une barre de retenue (98) pouvant être insérée dans la fente (96), la barre de retenue étant située sur un côté radialement interne du carénage de diamètre interne (80) pour empêcher le retrait de l'aube de stator du carénage de diamètre interne.

3. Système de rétention selon la revendication 1, comprenant en outre :
une fente (96) définie par la base (95) de l'aube de stator (62) ; et
une barre de retenue (98) pouvant être insérée dans la fente (96), la barre de retenue étant située sur un côté radialement interne du carénage de diamètre interne (80) pour empêcher le retrait de l'aube de stator du carénage de diamètre interne.

4. Système de rétention selon la revendication 2 ou 3, dans lequel la barre de retenue (98) a une section transversale principalement rectangulaire.

5. Système de rétention selon une quelconque revendication précédente, dans lequel l'aube de stator (62) est un stator de sortie de ventilateur (62) situé à proximité d'une entrée d'un compresseur basse pression (44) d'un moteur à turbine à gaz.

6. Système de rétention selon une quelconque revendication précédente, dans lequel l'élément de châssis (82) est un châssis de corps central avant du moteur à turbine à gaz.

7. Moteur à turbine à gaz (20) comprenant :
une section de compresseur (24) ;
une section de combustion (26) ;
une section de turbine (28) ; et
un système de rétention selon une quelconque revendication précédente, dans lequel l'aube de stator (62) est un stator de sortie de ventilateur (62) situé à proximité d'une entrée de la section de compresseur (24) et l'élément de châssis (82) est un châssis de corps central avant (82).

8. Procédé de retenue d'une aube de stator de sortie de ventilateur (62) d'un moteur à turbine à gaz (20) comprenant :
le couplage d'un carénage de diamètre externe (86) à un châssis de corps central avant (82) avec une fixation mécanique (90) ;
l'insertion d'une extrémité radialement interne (84) de l'aube de stator de sortie de ventilateur (62) à travers une ouverture d'un carénage de diamètre interne (80) ; et
le couplage fonctionnel du carénage de diamètre interne (80) à un élément de châssis (82) du moteur à turbine à gaz (20) au niveau d'une bride de carénage interne (92), la bride de carénage interne (92) définissant un évidement radial (94) pour permettre un mouvement radial du carénage de diamètre interne (80) par rapport à l'élément de châssis (82).

9. Procédé selon la revendication 8, comprenant en outre l'insertion d'une barre de retenue (98) à travers une fente (96) définie par l'aube de stator de sortie de ventilateur (62) à proximité de l'extrémité radialement interne (84) de l'aube de stator de sortie de ventilateur (62) après l'insertion de l'extrémité radialement interne (84) de l'aube de stator de sortie de ventilateur (62) à travers l'ouverture du carénage de diamètre interne (80) pour retenir radialement l'aube de stator de sortie de ventilateur (62) par rapport au carénage de diamètre interne (80).

10. Procédé selon la revendication 8 ou 9, dans lequel l'élément de châssis (82) est le châssis de corps central avant.
